(19) **Europäisches Patentamt / European Patent Office / Office européen des brevets**

(11) **EP 4 350 061 B1**

(12) **EUROPEAN PATENT SPECIFICATION**

(45) Date of publication and mention
of the grant of the patent:
**06.08.2025 Bulletin 2025/32**

(21) Application number: **22816058.6**

(22) Date of filing: **30.05.2022**

(51) International Patent Classification (IPC):
*D04B 21/14* (2006.01)    *A47C 31/02* (2006.01)
*B60N 2/58* (2006.01)    *D04B 21/16* (2006.01)
*A47C 31/00* (2006.01)

(52) Cooperative Patent Classification (CPC):
**B60N 2/58; B60N 2/5891; D04B 21/16;**
D10B 2403/0221; D10B 2403/0222; D10B 2505/08

(86) International application number:
**PCT/JP2022/021966**

(87) International publication number:
**WO 2022/255311 (08.12.2022 Gazette 2022/49)**

(54) **SEAT INCLUDING UPHOLSTERY MATERIAL**

SITZ MIT POLSTERMATERIAL

SIÈGE AVEC MATÉRIAU DE REMBOURRAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.06.2021  JP 2021092305**

(43) Date of publication of application:
**10.04.2024  Bulletin 2024/15**

(73) Proprietor: **Asahi Kasei Kabushiki Kaisha
Tokyo 1000006 (JP)**

(72) Inventor: **YANAGITA, Naoki
Tokyo 100-0006 (JP)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(56) References cited:
JP-A- 2002 339 206    JP-A- 2004 115 939
JP-A- 2019 072 867    JP-A- 2019 072 867
JP-B2- 6 345 833    US-A1- 2020 338 853

EP 4 350 061 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD

The present invention relates to a seat comprising a surface covering (or an upholstery) material for a seat.

BACKGROUND

Conventionally, three-dimensional knitted materials composed of a front-back two-layered knitted fabric and connecting yarns connecting the layers of two-layered knitted fabric have cushioning properties in the thickness direction by using monofilaments as the connecting yarns, and are widely used as a cushioning material having cooling and high dampness prevention properties in applications such as seats and bedding by using a mesh structure on the front and back sides of the knitted fabric to ensure high breathability.

When a three-dimensional knitted material is used as an surface material of a seat, high designability is exhibited by forming irregularities on the front side of the above cushioning material by heat embossing. However, durability such as surface abrasion resistance and cushioning properties required for a seat are inferior.

The following PTL 1 discloses that a sheet material having a gradation from a recessed portion to a non-recessed portion and excellent designability can be obtained by having a gradual changing portion in which the height from the bottom of the recessed portion gradually changes from the recessed portion to the non-recessed portion. PTL 2 discloses skin materials including a base fabric layer containing at least a thermoplastic resin fiber and a skin layer arranged on one surface side of the base fabric layer, where the base fabric layer is formed of a knitted fabric or a non-woven fabric, the base fabric layer has a step-like edge thermal deformation part formed by thermal deformation of a thermoplastic resin fiber over the whole circumference of the edge part of the base fabric layer, and the edge thermal deformation part includes a joint region in which fibers of the base fabric layer are bonded to each other over the whole circumference.

PTL 3 discloses a warp-knitted textile composite having a spacer fabric that extends in a production direction and a transverse direction and has an outer flat warp-knitted fabric layer of predetermined stretchability, an inner flat warp-knitted fabric layer of lesser stretchability in the production and transverse directions than the outer layer, and spacer threads interconnecting the warp-knitted fabric layers.

PTL 4 discloses a skin material having a base fabric layer formed of a fabric containing at least a thermoplastic resin fiber, and a skin layer arranged on one surface side of the base fabric layer, where the base fabric layer has a concave thermally deformed part on one surface side thereof, the skin layer follows the shape of the thermally deformed part, and a three-dimensional pattern formed of the concave thermally deformed part is composed of the thermally deformed part.

[CITATION LIST]

[PATENT LITERATURE]

[PTL 1] Japanese Unexamined Patent Publication (Kokai) No. 2019-104217
[PTL 2] JP 2019 072867 A
[PTL 3] US 2020/ 338853 A1
[PTL 4] JP 6 345833 B2

SUMMARY

[TECHNICAL PROBLEM]

In PTL 1, the surface condition for suppressing fluff due to wear and the formation of recessed portions for suppressing a sideways falling phenomenon were not considered, and the suppression performance of fluff due to rubbing against protrusions and the cushioning properties obtained by suppressing the sideways falling phenomenon were insufficient.

In view of the above state of the prior art, an object to be achieved in the present invention is to solve the above problems of the prior art and provide an surface material for seats of vehicles and furniture that has excellent designability by including a recess-shaped deformation portion and can suppress occurrence of fluff at the same time, even when the surface is rubbed by hard protrusions such as hook portions of a hook-and-loop fastener, and has excellent cushioning properties by suppressing a sideways falling phenomenon, and a seat comprising the same.

[SOLUTION TO PROBLEM]

The present inventors have undergone intensive studies and repeated experiments to achieve the above object. As a result, the present inventors have unexpectedly discovered that the above object can be achieved by an surface material for a seat, consisting of a three-dimensional knitted material composed of a front-back two-layered knitted fabric and a connecting yarn connecting layers of the two-layered knitted fabric, wherein a recess-shaped deformation portion is formed on the front side of the three-dimensional knitted material and a parameter A calculated from course density, thickness of the deformation portion (recessed portion) and fabric thickness of the three-dimensional knitted material is set within a specific range, and have completed the present invention.

Specifically, the present invention is as defined in the appended claims.

[ADVANTAGEOUS EFFECTS OF INVENTION]

The surface material for a seat employed in the present invention has excellent designability by including a recess-shaped deformation portion and can suppress occurrence of fluff at the same time, even when the surface is rubbed against hard protrusions such as hook portions of a hook-and-loop fastener, and has excellent cushioning properties by suppressing a sideways falling phenomenon.

BRIEF DESCRIPTION OF DRAWINGS

FIG. 1 is a diagram showing recessed deformation portions of Examples 1, 2, 3, 6, 9, 10, 11, and 15 and Comparative Examples 1 and 2.

FIG. 2 is a diagram showing recessed deformation portions of Examples 4, 7, and 12.

FIG. 3 is a diagram showing recessed deformation portions of Examples 5 and 13.

FIG. 4 is a diagram showing recessed deformation portions of Examples 8 and 14.

DESCRIPTION OF EMBODIMENTS

Hereinafter, embodiments of the present invention will be described in detail. The seat of the present invention comprises as the surface material a surface material for a seat, composed of a three-dimensional knitted material comprising a front-back two-layered knitted fabric having a front layer and a back layer and a connecting yarn connecting layers of the front-back two-layered knitted fabric, wherein the three-dimensional knitted material includes a recessed deformation portion on at least one of the layers, and a parameter A calculated by the following formula:

parameter A = course density (courses/2.54 cm) $\times$ recessed portion thickness (mm)/fabric thickness (mm) is 6 or greater and 36 or less.

The surface material comprises a three-dimensional knitted material composed of a front-back two-layered knitted fabric and a connecting yarn connecting the layers of the two-layered knitted fabric. The three-dimensional knitted material is knitted by a double Raschel warp knitting machine. For the gauge of the knitting machine, 18- to 28-gauge is preferably used.

It is necessary for the three-dimensional knitted material constituting the surface material used in the seat of the present invention to include a recess-shaped deformation portion on at least one of the layers. By including one or a plurality of the recessed deformation portions, the surface material employed in the present invention exhibits an excellent three-dimensional design. The recessed deformation portion refers to a thin portion formed on the surface of the three-dimensional knitted fabric by heat or pressure causing plastic deformation and fusion of fibers or by embroidery or sewing. Any other thin portions resulting from conformity to the above portion are excluded from the recessed deformation portion. A recessed deformation portion formed by fusion of fibers is typically formed by heat pressing. A recessed deformation portion formed by embroidery or sewing can be formed using any yarn or method, and depending on the pattern and the stitch shape, embroidery machines, lockstitch sewing machines, and zigzag sewing machines can be used. The recessed deformation portion is preferably formed by fusion of fibers from the viewpoint of suppressing fluff due to protrusions, or is preferably formed by embroidery or sewing from the viewpoint of obtaining more satisfactory cushioning properties by suppressing a sideways falling phenomenon.

In the three-dimensional knitted material constituting the surface material of the seat of the present invention, it is necessary for a parameter A calculated by the following formula:

parameter A = course density (courses/2.54 cm) x recessed deformation portion thickness (mm)/fabric thickness (mm) to be 6 or greater and 36 or less.

When the parameter A is less than 6, stitches on the front layer are coarse and the change in thickness from a non-deformation portion to a deformation portion is large, decreasing the contact area during compression and concentrating the pressure, whereby protrusions such as hook portions of a hook-and-loop fastener are more easily caught in single fibers of the stitches on the front layer and the single fibers are more easily cut and fluffed. In contrast, when the parameter A exceeds 36, it is more difficult for protrusions such as hook portions of a hook-and-loop fastener to be caught on single fibers of the stitches on the front layer. However, since the front layer is smoothened, slipping of a seated person's buttocks cannot be prevented. In addition, since the angle formed between the connecting yarn connecting the layers of the front-back two-layered knitted fabric and the fabric thickness direction decreases and the connecting yarn is not fixed at the recessed deformation portion, the sideways falling phenomenon cannot be suppressed and the cushioning properties degrade.

From the viewpoint of suppressing fluff due to protrusions, the range of the parameter A is preferably 8 or greater, and more preferably 10 or greater. From the viewpoint of preventing slipping of a seated person's buttocks and the viewpoint of obtaining more satisfactory cushioning properties by suppressing a sideways falling phenomenon, the range of the parameter A is preferably 30 or less, and more preferably 24 or less.

In order to set the parameter A to 6 or greater and 36 or less, when knitting the three-dimensional knitted material, it is preferable to adjust the fineness of the fibers used, the gauge of the knitting machine, the on-machine course, the knit structure, and the width-in rate, width-out rate, overfeed rate, and underfeed rate in a finishing process such as heat setting, and when forming a recess-shaped deformation portion on the front side of the three-dimensional knitted material, it is preferably to adjust the heating time, the cradle temperature, the press die shape, the press die temperature, and the press pressure when deformation by heating is used. Low-melting-point yarns or heat-fusible yarns can be used. When using other methods of forming a deformation, the recessed portion can be formed by embroidery. In that case, it is preferable to adjust the type of sewing yarn, the fineness, the embroidery pattern, the sewing machine needle, the sewing width, and the stitch pitch.

The sideways falling phenomenon is likely to occur when the knitted fabric of the front layer moves in the warp direction of the knitted fabric relative to the knitted fabric of the back layer during compression of the three-dimensional knitted material. In the three-dimensional knitted material constituting the surface material for a seat of the present embodiment, a recessed deformation portion is formed preferably across 5 or more continuous wales, and more preferably across 10 or more wales. When formed across 5 or more wales, movement of the front-layer knitted fabric in the knitted fabric warp direction is easily prevented by the recessed deformation portion, and the sideways falling phenomenon is easily suppressed.

In the three-dimensional knitted material constituting the surface material of the seat of the present invention, the recessed deformation portion is formed continuously on the same wale across preferably 60 courses or less, and more preferably 40 courses or less. When the recessed deformation portion is formed continuously on the same wale across 60 courses or less, deterioration in cushioning properties during seating due to local changes in compression characteristics caused by the recessed deformation portion is not likely to occur.

When the three-dimensional knitted material constituting the surface material of the seat of the present invention includes a plurality of recessed deformation portions, a spacing in the knitted fabric warp direction between recessed deformation portions closest to each other on the same wale is preferably 10 mm or more and less than 300 mm, and more preferably 15 mm or more and 250 mm or less. When the spacing in the knitted fabric warp direction between recessed deformation portions is 10 mm or more, deterioration in cushioning properties between the recessed deformation portions is more easily suppressed, and since the curvature of the protruding portion between the recessed deformation portions is increased, fluff due to protrusions is more easily suppressed. When the spacing in the knitted fabric warp direction between recessed deformation portions is less than 300 mm, in particular, movement of the front-layer knitted fabric in the knitted fabric warp direction between the recessed deformation portions is effectively suppressed, and the sidesways falling phenomenon is more easily suppressed.

For the three-dimensional knitted material constituting the surface material of the seat of the present inventon the stitch density in the knitted fabric of the front layer on the seating front side of the surface material for a seat is preferably 11500 or greater and 20000 or less.

The term "stitch density" herein, represented by the following formula:

$$\text{stitch density } M = N \times \sqrt{D}$$

wherein N is the number of stitches per 2.54 cm in the knitted fabric of the front layer, and D is the total fineness (decitex) of fibers forming one stitch in the knitted fabric of the front layer, is an index indicating the denseness of stitches of the knitted fabric of the front layer. Additionally, the "total fineness of fibers forming one stitch in the knitted fabric of the front layer" refers to the total fineness of only the fibers that form stitches, and fibers that do not form stitches, such as those of inlay knitting, are excluded therefrom.

When the stitch density is 11500 or greater, protrusions such as hook portions of a hook-and-loop fastener are less likely to be caught on single fibers of the stitches on the front layer, and the single fibers are less likely to be cut and fluffed.

From the viewpoint of suppressing fluff due to protrusions, the range of the stitch density is more preferably 13000 or greater and 23000 or less, and even more preferably 14000 or greater and 23000 or less.

In order to set the stitch density to 11500 or greater and 23000 or less, it is preferable to adjust the fineness of the fibers used in the knitted fabric of the front layer, the gauge of the knitting machine, the on-machine course, the knit structure, and the width-in rate, width-out rate, overfeed rate, and underfeed rate in a finishing process such as heat setting.

The material of the fibers used in the knitted fabric of the front layer is not limited, and may be a single material or a plurality of material composited by blending, twisting, mixed spinning, or interweaving. However, filaments of polyethylene terephthalate fibers are preferably used in terms of yarn strength and light fastness. From the viewpoint of increasing pull-out resistance of single fibers so that pulling out single fibers from the knitted fabric surface by protrusions such as hook portions of a hook-and-loop fastener is more difficult, the polyethylene terephthalate fibers are preferably false-twisted yarns, interlaced yarns, or twisted yarns.

Regarding the fineness of the fibers used in the knitted fabric of the front layer, fibers having a fineness of 100 decitex or more and 350 decitex or less are preferably used in order to optimize the stitch density. From the same viewpoint, the total fineness of one stitch consisting of fibers forming the knitted fabric of the front layer is preferably 150 decitex or more and 800 decitex or less.

When the fibers used in the knitted fabric of the front layer are multifilaments, the single-yarn fineness thereof is preferably 1 decitex or more and 6 decitex or less, and more preferably 3 decitex or more and 6 decitex or less to further increase the strength of a single yarn.

The fiber used for the connecting yarn is preferably a monofilament. When a monofilament is used for the connecting yarn, the fineness thereof is preferably 30 decitex or more and 300 decitex or less, and more preferably 50 decitex or more and 250 decitex or less to suppress protrusion of the monofilament onto the knitted fabric surface and maintain satisfactory cushioning properties.

Since the monofilament is easily caught on protrusions such as hook portions of a hook-and-loop fastener when protruding from the knitted fabric surface of the three-dimensional knitted material, it is desirable that the stitches of the fibers forming the knitted fabric of the front layer be pressed down on the monofilament stitches so that the monofilament does not protrude to the outside surface (i.e., seating surface of the surface material for a seat) of the knitted fabric of the front layer. Thus, it is preferable that the fineness D2 (decitex) of the monofilament relative to the fineness D1 (decitex) of one stitch consisting of fibers forming the knitted fabric of the front layer satisfy the following relational expression:

$$D1/D2 \geq 3.$$

Any material can be used for the fibers constituting the three-dimensional knitted material, and various fiber materials may be composited. However, it is preferable that the knitted fabric of the front layer, the connecting yarn, and the knitted fabric of the back layer be made of 100% polyethylene terephthalate fibers in terms of ease of recycling, such as material recycling and chemical recycling. Although these fibers may be undyed, a dope-dyed yarn or yarn-dyed yarn is preferably used to suppress variations in the properties of the three-dimensional knitted material during a dyeing process. A dope-dyed yarn kneaded with a pigment that can eliminate the need for a dyeing process is more preferably used.

The thickness of the three-dimensional knitted material constituting the surface material of the seat of the present invention can be arbitrarily set, but from the viewpoints of sewing and handling as an surface material and cushioning properties, is preferably 3 mm or more and 12 mm or less, and more preferably 3 mm or more and 8 mm or less. The basis weight of the three-dimensional knitted material can also be arbitrarily set, but is preferably 400 to 1000 $g/m^2$, and more preferably 500 to 900 $g/m^2$.

Regarding the finishing method for the three-dimensional knitted material constituting the surface material of the seat of the present invention, in the case of a three-dimensional knitted material using a yarn-dyed yarn or dope-dyed yarn, a gray fabric can be finished through processes such as scouring and heat setting, but is more preferably finished by heat setting only in terms of process simplification. In the case of a three-dimensional knitted material in which either the connecting yarn or the fibers used in the front-back two-layered knitted fabric are uncolored, the gray fabric can be finished through processes such as presetting, scouring, dyeing, and heat setting.

The surface material of the seat of the present invention is used for a seat, and can be laminated with urethane on the back surface of the seating surface as in conventional seat surface materials, but is preferably used without the lamination in terms of recyclability. The surface material for a seat of the present embodiment may be composed of a three-dimensional knitted material alone, but in terms of designability and functionality, may be composed in combination with other materials by sewing.

EXAMPLES

Hereinafter, the present invention will be more specifically described by way of the Examples and Comparative Examples. However, the present invention is not limited to the Examples only.

Methods for measuring various physical properties of the three-dimensional knitted materials used in the Examples were as follows.

(a) Parameter A

The course density (number of courses/2.54 cm) of a three-dimensional knitted material was visually measured. In addition, the thickness (mm) of the recessed deformation portion and the thickness (mm) of the non-deformation portion were measured. When a three-dimensional knitted material included a plurality of recessed deformation portions having different thicknesses, or when the thickness varied depending on the position on a recessed deformation portion, the thickness of the recessed portion was at a portion where the thickness was the smallest. For the fabric thickness, the thickness was measured at a portion where the effect of the recessed deformation portion on the fabric thickness was as small as possible. In other words, the fabric thickness was at a portion where the thickness of the three-dimensional knitted material was the largest. Thickness was measured using a thickness gauge under a pressure of 0.7 kPa. Further, the thickness of the recessed deformation portion was measured when the above pressure was applied only to the recessed deformation portion.

Using the course density, the thickness of the recessed deformation portion, and the fabric thickness as described above, a parameter A was calculated by the following formula:

parameter A = course density (courses/2.54 cm) $\times$ recessed portion thickness (mm)/fabric thickness (mm).

(b) Stitch density in knitted fabric of front layer

Yarns were extracted from the knitted fabric of the front layer of the three-dimensional knitted material, and the total fineness D (decitex) of the fibers forming one stitch of the knitted fabric of the front layer was measured. At this time, connecting yarns were not included. The product N of the number of courses per 2.54 cm and the number of wales per 2.54 cm of the three-dimensional knitted material was determined, and the stitch density in the knitted fabric of the front layer was calculated by the following formula:

$$\text{stitch density } M = N \times \sqrt{D}.$$

(c) Number of wales having formed thereon recessed deformation portion

A three-dimensional knitted material was cut into a size of 40 cm $\times$ 40 cm, one recessed deformation portion was extracted at random, and the number of wales having formed thereon the recessed deformation portion was visually counted. At this time, when the recessed deformation portion was formed across a plurality of courses, the total number of wales across the plurality of courses was counted instead of counting only the number of wales on the same course.

When the recessed deformation portion spanned the entire width of the cut three-dimensional knitted fabric, the number of wales in the entire width at the time of the three-dimensional knitting was the number of wales forming the recessed deformation portion.

(d) Number of courses having formed thereon recessed deformation portion on same wale

A three-dimensional knitted material was cut into a size of 40 cm $\times$ 40 cm, one recessed deformation portion was extracted at random, and the number of courses having formed thereon the recessed deformation portion on the same wale was visually counted.

(e) Spacing in knitted fabric warp direction between recessed deformation portions closest to each other on same wale

A three-dimensional knitted material was cut into a size of 40 cm × 40 cm, recessed deformation portions closest to each other on the same wale were extracted, and the spacing between the recessed deformation portions in the knitted fabric warp direction was visually measured using a ruler.

(f) Fluff due to hook-and-loop fastener (grade)

Using a flat abrasion tester manufactured by Daiei Kagaku Seiki Mfg. Co., a three-dimensional knitted material having a test piece size of 8 cm in width and 31 cm in length was placed on a flat abrasion table of the flat abrasion tester with the knitted fabric of the front layer facing upward, and both ends were fixed with clamps. Magic tape™ A8693Y.71 (length of 5 cm) was then attached to a rubbing element with the hook side facing outward. The rubbing element was set on the test piece, and a wear test was carried out 5 times at a pressing load of 9.8 N including the rubbing element, a stroke of 14 cm, and a speed of 60 ± 10 reciprocations/min. Test pieces were collected from the vertical and horizontal directions of the three-dimensional knitted material and measured. After the test, the wear condition on the surface of the test piece was observed, and a grade was determined based on the following criteria. Determinations were made in 0.5-grade increments.
Grade 5: No fluff was visible.
Grade 4: Fluff was slightly visible.
Grade 3: Fluff was clearly visible, but yarn breakage was not noticeable.
Grade 2: Fluff was somewhat significant, and there were yarn breakage and "pulling-out" of yarns.
Grade 1: Fluff was significant, and there were severe abnormalities in appearance.

(g) Cushioning properties

The surface material was stretched over urethane pads on the seat portion and back portion of an automobile seat, and a seat in which the entire surface of the seat in contact with a human body was formed of the surface material composed of a three-dimensional knitted material was produced.
A grade was determined for how a monitor sitting on the seat felt about cushioning based on the following criteria and taken as an evaluation of cushioning properties. Determinations were made in 0.5-grade increments.

Grade 5: There was firm cushioning, and it was comfortable.
Grade 4: There was cushioning, and it was somewhat comfortable.
Grade 3: There was some cushioning, but it was not comfortable.
Grade 2: There was slight cushioning, and it was somewhat uncomfortable.
Grade 1: There was no cushioning, and it was uncomfortable

(h) Slipperiness

A grade was determined for how a monitor sitting on the seat felt about slipperiness against the buttocks based on the following criteria and taken as an evaluation of slipperiness. Determinations were made in 0.5-grade increments.
Grade 5: There was no slipping at all; secure gripping was felt.
Grade 4: There was almost no slipping; gripping was felt.
Grade 3: Slipping was somewhat difficult.
Grade 2: Slipping was somewhat easy; not much gripping was felt.
Grade 1: Slipping was considerably easy; no gripping was felt at all.

(i) Sideways falling properties

A surface material cut into a square having a length of 40 cm on one side was arranged on a horizontal tabletop with the front layer facing up, and based on the following criteria, a grade was determined for sideways falling properties when the surface material was pushed by hand from above and taken as an evaluation of sideways falling properties. Determinations were made in 0.5-grade increments.
Grade 5: No sideways falling occurred at all.
Grade 4: Sideways falling occurred slightly.
Grade 3: Sideways falling occurred.
Grade 2: Sideways falling occurred considerably.

Grade 1: Sideways falling occurred very easily; no recovery occurred after compression.

[Examples 1 to 7]

Using a 22-gauge double Raschel knitting machine equipped with 6 reeds and 6 mm trick plate distance, two false-twisted yarns of 167-decitex 48-filament polyethylene terephthalate fibers (black dope-dyed yarns) were pulled from two reeds (L1, L2) forming the knitted fabric of the front layer and fed in 1-in, 1-out (L1) and 1-out, 1-in (L2) arrangements, monofilaments of 110-decitex polyethylene terephthalate fibers (black dope-dyed yarns) were then fed from one reed (L3) forming a connecting portion in a 1-out, 1-in (L3) arrangement, and false-twisted yarns of 167-decitex 48-filament polyethylene terephthalate fibers (black dope-dyed yarns) were further fed from two reeds (L5, L6) forming the knitted fabric of the back layer, both in an all-in arrangement, to knit a three-dimensional knitted material gray fabric.

The three-dimensional knitted material gray fabric was knitted with a knit structure indicated below at an on-machine course of 33 courses/2.54 cm. The resulting gray fabric was drawn in width by 1% and subjected to dry heat setting at 175 °C × 1 min at an overfeed rate of 0%, followed by heat pressing for 6 s from the front layer side at a press die temperature of 200 °C using a press die designed as indicated below to obtain a three-dimensional knitted material including recessed deformation portions having the various physical properties in Table 1 below, and was used as an surface material for a seat.

(Knit structure)

L1: 1011/2322/ (1-in, 1-out)
L2: 2322/1011/ (1-out, 1-in)
L3: 3410/4367/ (1-out, 1-in)
L4: - (yarn not fed)
L5: 0001/1110/ (all-in)
L6: 2234/2210/ (all-in)

(Press die design)

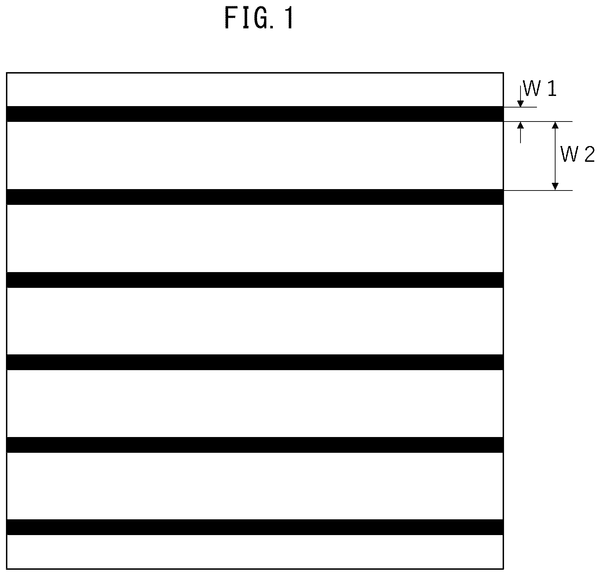

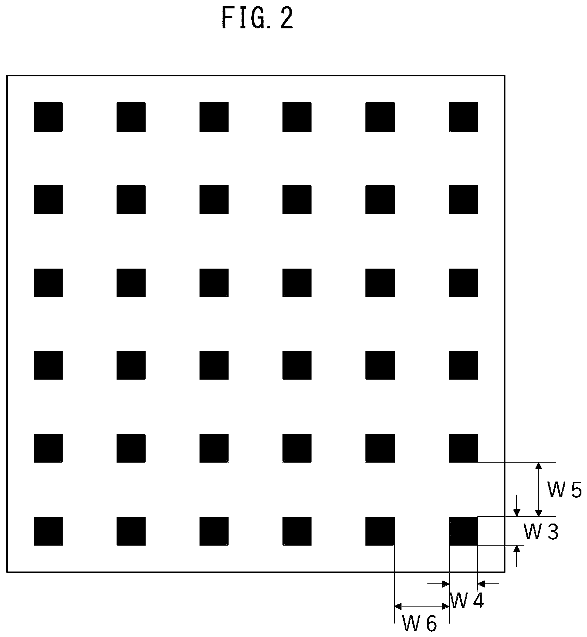

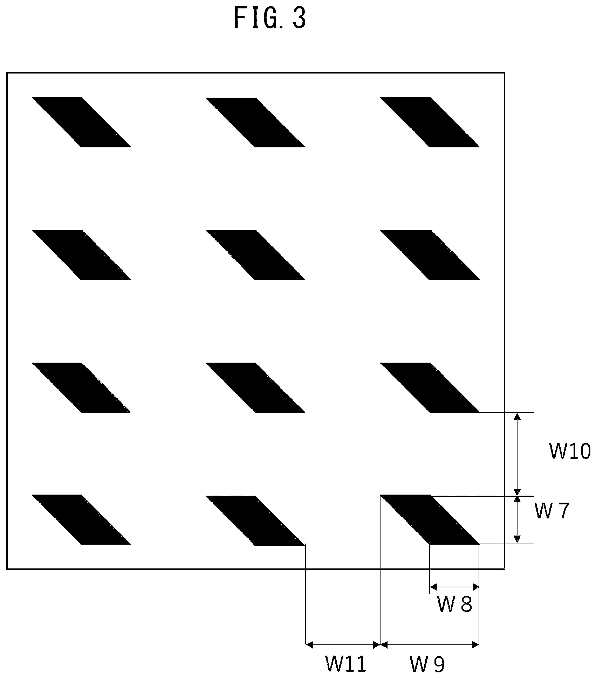

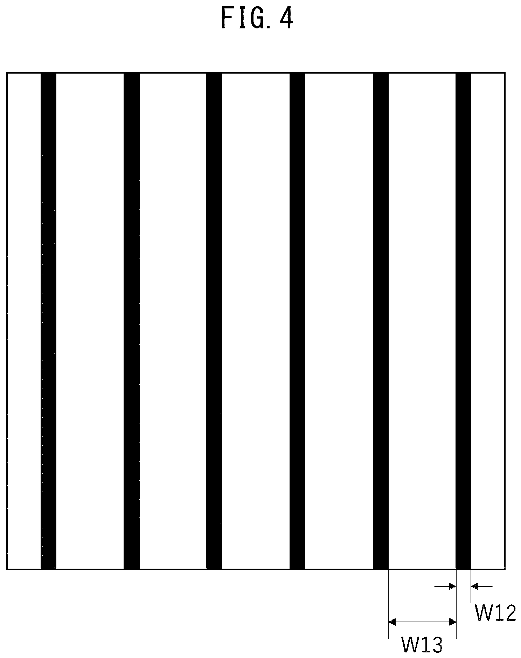

Example 1: Refer to FIG. 1 (W1: 1 mm, W2: 12 mm).
Example 2: Refer to FIG. 1 (W1: 2 mm, W2: 16 mm).
Example 3: Refer to FIG. 1 (W1: 7 mm, W2: 38 mm).
Example 4: Refer to FIG. 2 (W3: 5 mm, W4: 5 mm, W5: 5 mm, W6: 5 mm).
Example 5: Refer to FIG. 3 (W7: 35 mm, W8: 35 mm, W9: 70 mm, W10: 60 mm, W11: 60 mm).
Example 6: Refer to FIG. 1 (W1: 50 mm, W2: 60 mm).
Example 7: Refer to FIG. 2 (W3: 8 mm, W4: 8 mm, W5: 12 mm, W6: 12 mm).
Example 8: Refer to FIG. 4 (W12: 1 mm, W13: 12 mm).

The white-colored portions in FIGS. 1 to 4 are recessed portions on the press dies, and the black-colored portions are the protruding portions. In other words, recessed deformation portions having the same shapes as the black-colored portions in the drawings are formed on the three-dimensional knitted fabrics. In addition, FIGS. 1 to 4 show repeating units of the press dies and do not limit the number of recessed deformation portions. In the Examples and Comparative Examples, the recessed deformation portions shown in FIGS. 1 to 4 are formed repeatedly in the knitted fabric warp direction and the knitted fabric weft direction. Further, pressing was carried out so that the vertical direction in FIGS. 1 to 4 matched the warp direction of the three-dimensional knitted fabrics.

[Example 9]

Except that false-twisted yarns of 222-decitex 48-filament polyethylene terephthalate fibers (black dope-dyed yarns) were fed from two reeds (L1, L2) forming the knitted fabric of the front layer and the on-machine course was set to 24 courses/2.54 cm, a three-dimensional knitted material including recessed deformation portions having the various physical properties shown in Table 1 below was obtained in the same manner as in Example 1, and was used as an surface material for a seat.

[Example 10]

Except that the on-machine course was set to 38 courses/2.54 cm, a three-dimensional knitted material including recessed deformation portions having the various physical properties in Table 2 below was obtained in the same manner as in Example 9, and was used as an surface material for a seat.

[Example 11]

Except that recessed deformation portions were formed by embroidering the black-colored portions in FIG. 1 without heat pressing after heat setting, a three-dimensional knitted material including recessed deformation portions having the various physical properties in Table 2 below was obtained in the same manner as in Example 1, and was used as an surface material for a seat.

[Example 12]

Except that recessed deformation portions were formed by embroidering the black-colored portions in FIG. 2 without heat pressing after heat setting, a three-dimensional knitted material including recessed deformation portions having the various physical properties in Table 2 below was obtained in the same manner as in Example 4, and was used as an surface material for a seat.

[Example 13]

Except that recessed deformation portions were formed by embroidering the black-colored portions in FIG. 3 without heat pressing after heat setting, a three-dimensional knitted material including recessed deformation portions having the various physical properties in Table 2 below was obtained in the same manner as in Example 5, and was used as an surface material for a seat.

[Example 14]

Except that recessed deformation portions were formed by embroidering the black-colored portions in FIG. 4 without heat pressing after heat setting, a three-dimensional knitted material including recessed deformation portions having the various physical properties in Table 2 below was obtained in the same manner as in Example 8, and was used as an surface material for a seat.

[Example 15]

Except that recessed deformation portions were formed by embroidering the black-colored portions in FIG. 1 without heat pressing after heat setting, a three-dimensional knitted material including recessed deformation portions having the various physical properties in Table 2 below was obtained in the same manner as in Example 9, and was used as an surface material for a seat.

[Comparative Example 1]

Except that the press die temperature was set to 220 °C and the press time was set to 10 s, a three-dimensional knitted material including recessed deformation portions having the various physical properties in Table 2 below was obtained in the same manner as in Example 9, and was used as an surface material for a seat.

[Comparative Example 2]

Except that the press die temperature was set to 120 °C and the press time was set to 3 s, a three-dimensional knitted material including recessed deformation portions having the various physical properties in Table 2 below was obtained in the same manner as in Example 10, and was used as an surface material for a seat.

[Table 1]

| | Example 1 | Example 2 | Example 3 | Example 4 | Example 5 | Example 6 | Example 7 | Example 8 | Example 9 |
|---|---|---|---|---|---|---|---|---|---|
| Total fineness of fibers forming one stitch in knitted fabric of front layer (decitex) | 334 | 334 | 334 | 334 | 334 | 334 | 334 | 334 | 444 |
| Wale density (number of wales/2.54 cm) | 22 | 22 | 22 | 22 | 22 | 22 | 22 | 22 | 20 |
| Course density (number of courses/2.54 cm) | 35 | 35 | 35 | 35 | 35 | 35 | 35 | 35 | 25 |
| Recessed deformation portion thickness (mm) | 3.50 | 3.76 | 4.91 | 2.03 | 3.11 | 2.86 | 1.79 | 2.05 | 2.56 |
| Fabric thickness (mm) | 5.71 | 5.79 | 6.12 | 5.49 | 5.71 | 5.71 | 3.81 | 5.66 | 6.12 |
| Parameter A | 21.5 | 22.7 | 28.1 | 13.0 | 19.0 | 17.5 | 16.4 | 12.6 | 10.5 |
| Number of continuous wales in recessed deformation portion | 346 | 346 | 346 | 4 | 61 | 346 | 7 | 1 | 315 |
| Number of continuous courses in recessed deformation portion on same wale | 1 | 3 | 10 | 7 | 48 | 69 | 11 | 551 | 1 |
| Spacing in knitted fabric warp direction between recessed deformation portions (mm) | 12 | 16 | 38 | 5 | 60 | 60 | 12 | - | 38 |
| Stitch density | 14072 | 14072 | 14072 | 14072 | 14072 | 14072 | 14072 | 14072 | 10536 |
| Fluff due to hook-and-loop fastener in warp direction (grade) | 4 | 4.5 | 4.5 | 3.5 | 4 | 4 | 4 | 3.5 | 3 |

(continued)

|  | Example 1 | Example 2 | Example 3 | Example 4 | Example 5 | Example 6 | Example 7 | Example 8 | Example 9 |
|---|---|---|---|---|---|---|---|---|---|
| Fluff due to hook-and-loop fastener in weft direction (grade) | 3.5 | 3.5 | 3.5 | 3 | 3.5 | 3.5 | 3 | 4 | 2.5 |
| Cushioning properties (grade) | 4.5 | 4.5 | 4.5 | 3.5 | 3.5 | 3 | 3 | 2.5 | 4.5 |
| Sideways falling properties (grade) | 4.5 | 4.5 | 4 | 3 | 4 | 4 | 4 | 2.5 | 4.5 |
| Slipperiness (grade) | 4 | 3.5 | 3.5 | 4 | 4 | 4 | 4 | 4 | 4.5 |

[Table 2]

|  | Example 10 | Example 11 | Example 12 | Example 13 | Example 14 | Example 15 | Comparative Example 1 | Comparative Example 2 |
|---|---|---|---|---|---|---|---|---|
| Total fineness of fibers forming one stitch in knitted fabric of front layer (decitex) | 444 | 334 | 334 | 334 | 334 | 444 | 444 | 444 |
| Wale density (number of wales/2.54 cm) | 25 | 22 | 22 | 22 | 22 | 20 | 20 | 25 |
| Course density (number of courses/2.54 cm) | 41 | 35 | 35 | 35 | 35 | 25 | 25 | 41 |
| Recessed deformation portion thickness (mm) | 3.82 | 3.74 | 2.31 | 2.85 | 2.32 | 2.39 | 1.29 | 6.32 |
| Fabric thickness (mm) | 6.63 | 5.58 | 5.32 | 5.50 | 5.51 | 5.92 | 5.66 | 6.73 |
| Parameter A | 23.6 | 23.5 | 15.2 | 18.1 | 14.7 | 10.1 | 5.7 | 38.5 |
| Number of continuous wales in recessed deformation portion | 394 | 346 | 4 | 61 | 1 | 315 | 315 | 394 |

(continued)

| | Example 10 | Example 11 | Example 12 | Example 13 | Example 14 | Example 15 | Comparative Example 1 | Comparative Example 2 |
|---|---|---|---|---|---|---|---|---|
| Number of continuous courses in recessed deformation portion on same wale | 2 | 1 | 7 | 48 | 551 | 1 | 1 | 2 |
| Spacing in knitted fabric warp direction between recessed deformation portions (mm) | 38 | 12 | 5 | 60 | - | 38 | 38 | 38 |
| Stitch density | 21598 | 14072 | 14072 | 14072 | 14072 | 10536 | 10536 | 21598 |
| Fluff due to hook-and-loop fastener in warp direction (grade) | 4.5 | 3.5 | 3 | 3.5 | 3 | 2.5 | 2 | 4.5 |
| Fluff due to hook-and-loop fastener in weft direction (grade) | 4 | 3 | 2.5 | 3 | 3.5 | 2.5 | 1 | 4 |
| Cushioning properties (grade) | 4.5 | 4.5 | 3.5 | 3.5 | 2.5 | 4.5 | 3.5 | 4.5 |
| Sideways falling properties (grade) | 4.5 | 5 | 3.5 | 4.5 | 3 | 5 | 5 | 1.5 |
| Slipperiness (grade) | 4 | 4 | 4 | 4 | 4 | 4.5 | 4.5 | 2 |

As indicated in Tables 1 and 2, in the surface materials for a seat comprising a three-dimensional knitted material including recessed deformation portions of Examples 1 to 15, wherein the parameter A was 6 or greater and 36 or less, fluff due to a hook-and-loop fastener (hook side), a sideways falling phenomenon during compression, and slipperiness of the seating portion were suppressed, and cushioning properties were satisfactory.

In Comparative Example 1, wherein the parameter A was less than 6, although cushioning properties were satisfactory and a sideways falling phenomenon and slipperiness were suppressed, fluff properties due to a hook-and-loop fastener was remarkably low.

In Comparative Example 2, the parameter A was excessively high at 39. Although fluff due to a hook-and-loop fastener was suppressed, a sideways falling phenomenon and slipperiness could not be suppressed.

INDUSTRIAL APPLICABILITY

The surface material of the seat of the present invention is an surface material for a seat that can be arranged on a cushioning member such as a urethane pad to form a seat in a seat of a vehicle or furniture or can be stretched on a seat frame to form a lightweight and thin seat, has high cushioning properties and can suppress the occurrence of fluff at the same time, even when the surface is rubbed against hard protrusions such as hook portions of a hook-and-loop fastener, and can be suitably used to suppress slipping during seating.

**Claims**

1.  A seat **characterized in that** said seat comprises as the surface material a material composed of a three-dimensional knitted material comprising a front-back two-layered knitted fabric having a front layer and a back layer and a connecting yarn connecting layers of the front-back two-layered knitted fabric, wherein the three-dimensional knitted material is knitted with a double Raschel warp knitting machine and includes a recessed deformation portion on a front layer side, and a parameter A calculated by the following formula:

    parameter A = course density (courses/2.54 cm) × recessed deformation portion thickness (mm)/fabric thickness (mm) is 6 or greater and 36 or less,

    > wherein the recessed deformation portion is a thin portion formed on the surface of the three-dimensional knitted fabric by heat or pressure causing plastic deformation and fusion of fibers or by embroidery or sewing,
    > wherein the recessed deformation portion thickness is measured using a thickness gauge under a pressure of 0.7 kPa, whereby said pressure is applied only to the recessed deformation portion, and, when the three-dimensional knitted material includes a plurality of recessed deformation portions having different thicknesses, or when the thickness varies depending on the position on a recessed deformation portion, the thickness of the recessed portion is that at a portion where the thickness is the smallest, and
    > wherein the fabric thickness is the thickness measured using a thickness gauge under a pressure of 0.7 kPa at a portion where the thickness of the three-dimensional knitted material is the largest.

2.  The seat according to claim 1, wherein the recessed deformation portion is formed across 5 or more continuous wales.

3.  The seat according to claim 1 or 2, wherein the recessed deformation portion is formed continuously across 60 courses or less on a same wale.

4.  The seat according to any of claims 1 to 3, wherein the three-dimensional knitted material includes a plurality of recessed deformation portions, and a spacing between recessed deformation portions closest to each other on a same wale is 10 mm or more and less than 300 mm.

5.  The seat according to claim 4, wherein a spacing between recessed deformation portions closest to each other on a same wale is 15 mm or more and less than 300 mm.

6.  The seat according to claim 1 or 2, wherein the recessed deformation portion is formed by fusion of fibers.

7.  The seat according to claim 5, wherein the recessed deformation portions are formed by fusion of fibers.

8.  The seat according to claim 1 or 2, wherein the recessed deformation portion is formed by embroidery or sewing.

9.  The seat according to any of claims 1 to 8, wherein a stitch density in a front layer of the three-dimensional knitted material is 11500 or greater and 23000 or less, whereby the stitch density is represented by the following formula:

$$\text{stitch density } M = N \times \sqrt{D}$$

    wherein N is the number of stitches per 2.54 cm in the knitted fabric of the front layer, and D is the total fineness (decitex) of fibers forming one stitch in the knitted fabric of the front layer.

10. The seat according to claim 9, wherein a stitch density in a front layer of the three-dimensional knitted material is 13000 or greater and 23000 or less.

**Patentansprüche**

1.  Sitz, **dadurch gekennzeichnet, dass** der Sitz als Oberflächenmaterial ein Material umfasst, das aus einem dreidimensional gewirkten Material besteht, welches ein bezüglich Vorderseite-Rückseite zweischichtiges Gewirk umfasst, das eine vordere Schicht und eine hintere Schicht und ein Verbindungsgarn, welches Schichten des bezüglich Vorderseite-Rückseite zweischichtiges Gewirks miteinander verbindet, aufweist, wobei das dreidimensional gewirkte Material mit einer Doppel-Raschel-Kettwirkmaschine gewirkt ist und einen vertieften Verformungsteil auf einer Vorderschichtseite umfasst und ein Parameter A, der durch die folgende Formel berechnet wird:

Parameter A = Maschenreihendichte (Maschenreihen/2,54 cm) × Dicke des vertieften Verformungsteils (mm)/ Stoffdicke (mm)

6 oder mehr und 36 oder weniger beträgt,
wobei der vertiefte Verformungsteil ein dünner Teil ist, der durch Wärme oder Druck, was eine plastische Verformung und Verschmelzung von Fasern verursacht, oder durch Sticken oder Nähen auf der Oberfläche des dreidimensional gewirkten Materials ausgebildet ist,
wobei die Dicke des vertieften Verformungsteils mit Hilfe eines Dickenmessgeräts unter einem Druck von 0,7 kPa gemessen wird, wodurch der Druck nur auf den vertieften Verformungsteil ausgeübt wird, und wenn das dreidimensional gewirkte Material eine Vielzahl von vertieften Verformungsteilen mit unterschiedlichen Dicken umfasst oder wenn die Dicke je nach Position auf einem vertieften Verformungsteil variiert, dann ist die Dicke des vertieften Teils diejenige an einem Teil, wo die Dicke am geringsten ist,
wobei die Stoffdicke die Dicke ist, welche mit Hilfe eines Dickenmessgeräts unter einem Druck von 0,7 kPa an einem Teil, wo die Dicke des dreidimensional gewirkten Materials am größten ist, gemessen wird.

2. Sitz gemäß Anspruch 1, wobei der vertiefte Verformungsteil über 5 oder mehr fortlaufende Maschenstäbchen ausgebildet ist.

3. Sitz gemäß Anspruch 1 oder 2, wobei der vertiefte Verformungsteil fortlaufend über 60 Maschenreihen oder weniger auf demselben Maschenstäbchen ausgebildet ist.

4. Sitz gemäß einem der Ansprüche 1 bis 3, wobei das dreidimensional gewirkte Material eine Vielzahl von vertieften Verformungsteilen umfasst und der Abstand zwischen vertieften Verformungsteilen, die auf demselben Maschenstäbchen unmittelbar benachbart sind, 10 mm oder mehr und weniger als 300 mm beträgt.

5. Sitz gemäß Anspruch 4, wobei der Abstand zwischen vertieften Verformungsteilen, die auf demselben Maschenstäbchen unmittelbar benachbart sind, 15 mm oder mehr und weniger als 300 mm beträgt.

6. Sitz gemäß Anspruch 1 oder 2, wobei der vertiefte Verformungsteil durch Verschmelzung von Fasern gebildet wird.

7. Sitz gemäß Anspruch 5, wobei die vertieften Verformungsteile durch Verschmelzung von Fasern gebildet sind.

8. Sitz gemäß Anspruch 1 oder 2, wobei der vertiefte Verformungsteil durch Sticken oder Nähen gebildet ist.

9. Sitz gemäß einem der Ansprüche 1 bis 8, wobei die Maschendichte in einer vorderen Schicht des dreidimensional gewirkten Materials 11500 oder mehr und 23000 oder weniger beträgt, wobei die Maschendichte durch die folgende Formel dargestellt wird:

$$\text{Maschendichte } M = N \times \sqrt{D},$$

wobei N die Anzahl der Maschen pro 2,54 cm in dem Gewirk der vorderen Schicht ist und D die Gesamtfeinheit (Decitex) von Fasern ist, die in dem Gewirk der vorderen Schicht eine Masche bilden.

10. Sitz gemäß Anspruch 9, wobei die Maschendichte in einer vorderen Schicht des dreidimensional gewirkten Materials 13000 oder mehr und 23000 oder weniger beträgt.

**Revendications**

1. Siège **caractérisé en ce que** ledit siège comprend, en tant que matériau de surface, un matériau composé d'un matériau tricoté tridimensionnel comprenant une étoffe tricotée à deux couches avant-arrière ayant une couche avant et une couche arrière et un fil de connexion connectant des couches de l'étoffe tricotée à deux couches avant-arrière, dans lequel le matériau tricoté tridimensionnel est tricoté avec une machine à tricoter en chaîne Raschel double et comprend une portion de déformation en creux sur le côté couche avant, et le paramètre A calculé par la formule suivante :

paramètre A = densité des rangées de mailles (rangées de mailles par 2,54 cm) x épaisseur de la portion de déformation en creux (mm) / épaisseur de l'étoffe (mm)

est de 6 ou plus et 36 ou moins,
dans lequel la portion de déformation en creux est une portion mince formée sur la surface de l'étoffe tricotée tridimensionnelle par de la chaleur ou une pression provoquant une déformation plastique et une fusion de fibres ou par broderie ou couture,
dans lequel l'épaisseur de la portion de déformation en creux est mesurée au moyen d'une jauge d'épaisseur sous une pression de 0,7 kPa, moyennant quoi ladite pression est appliquée uniquement à la portion de déformation en creux et, quand le matériau tricoté tridimensionnel inclut une pluralité de portions de déformation en creux ayant des épaisseurs différentes, ou quand l'épaisseur varie en fonction de la position sur une portion de déformation en creux, l'épaisseur de la portion en creux est celle au niveau d'une portion où l'épaisseur est la plus petite, et
dans lequel l'épaisseur de l'étoffe est l'épaisseur mesurée au moyen d'une jauge d'épaisseur sous une pression de 0,7 kPa au niveau d'une portion où l'épaisseur du matériau tricoté tridimensionnel est la plus grande.

2. Siège selon la revendication 1, dans lequel la portion de déformation en creux est formée sur 5 colonnes de mailles ou plus.

3. Siège selon la revendication 1 ou 2, dans lequel la portion de déformation en creux est formée en continu sur 60 rangées de mailles ou moins sur une même colonne de mailles.

4. Siège selon l'une quelconque des revendications 1 à 3, dans lequel le matériau tricoté tridimensionnel inclut une pluralité de portions de déformation en creux, et l'espacement entre des portions de déformation en creux les plus proches l'une de l'autre sur une même colonne de mailles est de 10 mm ou plus et inférieur à 300 mm.

5. Siège selon la revendication 4, dans lequel l'espacement entre des portions de déformation en creux les plus proches l'une de l'autre sur une même colonne de mailles est de 15 mm ou plus et inférieur à 300 mm.

6. Siège selon la revendication 1 ou 2, dans lequel la portion de déformation en creux est formée par fusion de fibres.

7. Siège selon la revendication 5, dans lequel les portions de déformation en creux sont formées par fusion de fibres.

8. Siège selon la revendication 1 ou 2, dans lequel la portion de déformation en creux est formée par broderie ou couture.

9. Siège selon l'une quelconque des revendications 1 à 8, dans lequel la serre des mailles dans une couche avant du matériau tricoté tridimensionnel est de 11 500 ou plus et 23 000 ou moins, moyennant quoi la serre des mailles est représentée par la formule suivante :

$$\text{serre des mailles } M = N \times \sqrt{D}$$

dans laquelle N est le nombre de mailles par 2,54 cm dans l'étoffe tricotée de la couche avant, et D est la finesse totale (décitex) des fibres formant une maille dans l'étoffe tricotée de la couche avant.

10. Siège selon la revendication 9, dans lequel la serre des mailles dans une couche avant du matériau tricoté tridimensionnel est de 13 000 ou plus et 23 000 ou moins.

# FIG. 1

FIG. 2

W 5

W 3

W 4

W 6

FIG. 3

# FIG. 4

W12

W13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019104217 A
- JP 2019072867 A
- US 2020338853 A1
- JP 6345833 B